# EUROPEAN PATENT APPLICATION

(11) **EP 3 552 776 A1**
(43) Date of publication of application: **16.10.2019**
(21) Application number: 19166186.7
(22) Date of filing: 29.03.2019
(51) Int. Cl.: B25J 9/16, G05B 19/408

(54) **ROBOT AND METHOD FOR CONTROLLING THE SAME**

(30) Priority: 12.04.2018 US 201815951823
(71) Applicant: Aeolus Robotics Corporation Limited, Hong Kong (HK)
(72) Inventor: WANG, Chao Hsiang, 114 Taipei (TW); SHIH, Chia Mao, 114 Taipei (TW); TENG, Li Chung, 114 Taipei (TW)
(74) Representative: Scintilla Intellectual Property Ltd

(57) **Abstract**

A method for controlling an object is provided. The method includes selecting an image data corresponding to a first code; converting the first code into a second code; and controlling the object by the second code or a portion of the second code.

## Description

### BACKGROUND

### 1. Technical Field

The present disclosure relates generally to a robot and a method for controlling the same.

### 2. Description of the Related Art

Robots are electro-mechanical devices that are able to manipulate objects using a series of robotic links. Various kinds of robots are used in a variety of fields recently, such as intelligent home, military, factory automation, hospitals, outer space or the like. The robots respectively have a unique control scenario according to a particular purpose of each field and operate according to the control scenario. Since robots are equipped with more complicated actions or operations recently, it is desired to develop an easy and efficient way to control the robots.

### SUMMARY

In one or more embodiments, a method for controlling an object includes selecting an image data corresponding to a first code; converting the first code into a second code; and controlling the object by the second code or a portion of the second code.

In one or more embodiments, a device is provided. The device includes a receiver, a conversion element and a transmitter. The receiver is configured to receive a first code. The first code corresponding to an image data. The conversion element is configured to convert the first code into a second code. The transmitter is configured to transmit the second code to an object.

In one or more embodiments, a robot is provided. The robot includes a communication module and a processor. The communication module is configured to receive a code. The processor is configured to convert the code into a signal. The code is associated with an image displayed on a display device, and wherein the signal is associated with behavior of the robot.

### BRIEF DESCRIPTION OF THE DRAWINGS

Aspects of the present disclosure are best understood from the following detailed description when read with the accompanying drawings. It is noted that various features may not be drawn to scale, and the dimensions of the various features may be arbitrarily increased or reduced for clarity of discussion.
FIG. 1 illustrates a block diagram of the hardware architecture of a robot in accordance with some embodiments of the present disclosure;
FIG. 2 illustrates a flow chart for controlling a robot in accordance with some embodiments of the present disclosure; and
FIG. 3 illustrates a flow diagram for controlling a robot in accordance with some embodiments of the present disclosure.

Common reference numerals are used throughout the drawings and the detailed description to indicate the same or similar elements. The present disclosure will be more apparent from the following detailed description taken in conjunction with the accompanying drawings.

### DETAILED DESCRIPTION

Structures, manufacturing and use of the embodiments of the present disclosure are discussed in detail below. It should be appreciated, however, that the embodiments set forth many applicable concepts that can be embodied in a wide variety of specific contexts. It is to be understood that the following disclosure provides many different embodiments or examples of implementing different features of various embodiments. Specific examples of components and arrangements are described below for purposes of discussion. These are, of course, merely examples and are not intended to be limiting.

Embodiments, or examples, illustrated in the drawings are disclosed below using specific language. It will nevertheless be understood that the embodiments or examples are not intended to be limiting. Any alterations and modifications of the disclosed embodiments, and any further applications of the principles disclosed in this document, as would normally occur to one of ordinary skill in the pertinent art, fall within the scope of this disclosure.

In addition, the present disclosure may repeat reference numerals and/or letters in the various examples. This repetition is for the purpose of simplicity and clarity and does not in itself dictate a relationship between the various embodiments and/or configurations discussed.

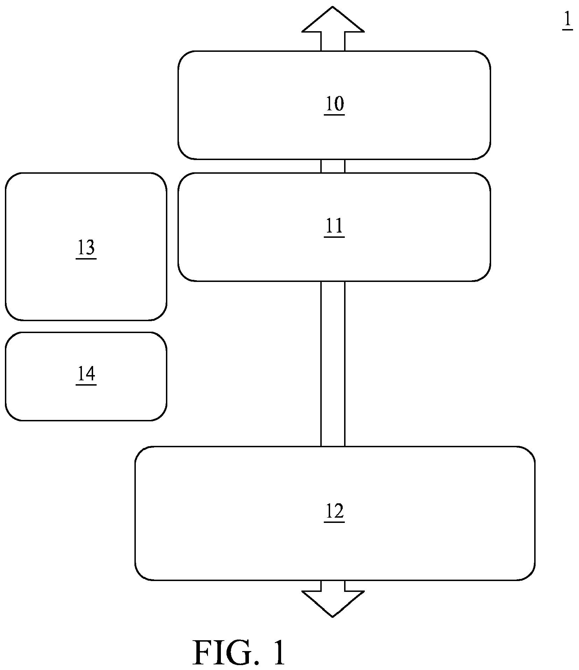

FIG. 1 illustrates a block diagram of the hardware architecture of a robot 1 in accordance with some embodiments of the present disclosure. The robot 1 includes a head 10, a body 11, a base 12, an arm 13 and an end-effector 14. In other embodiments, the components of the robot 1 in FIG. 1 can be replaced by any other components, devices or components that can achieve the same or similar functions.

The head 10 of the robot 1 may include an image sensor (e.g., RGB-D camera) configured to capture images of an object or the environment. The head 10 of the robot 1 may include a microphone configured to capture a voice or sound of an object or the environment. The head 10 of the robot 1 may include a display and a speaker to provide an expression or to show information (e.g., a facial expression, a voice, a sound effect and the like). In some embodiments, the head 10 of the robot 1 may include a lighting device (e.g., LED) configured to emit a light beam.

The body 11 of the robot 1 may include various kinds of processing units configured to calculate or process images, information or data obtained by the robot. In some embodiments, the processing units may include a central processing unit (CPU), a complex programmable logic device (CPLD), a field-programmable gate array (FPGA), a graphic processing unit (GPU), and/or an application-specific integrated circuit (ASIC). The body 11 of the robot 1 may include a real-time operating system (RTOS) configured to serve real-time applications that process data as it comes in, typically without buffer delays. In some embodiments, the body 11 of the robot 1 may include an emergency button configured to shut down or terminate the robot.

The base 12 of the robot 1 may include various kinds of sensors (e.g., sonar, Lidar, odometry, inertial measurement unit (IMU) and the like) configured to receive, detect or recognize information (e.g., physical signal) from an object or an environment. In some embodiments, a battery may be located at the base 12 of the robot 1 and configured to power the robot 1. In some embodiments, the battery is not removable, and thus the robot can be disposed on a charging dock to charge the battery. In other embodiments, the battery is removable, and thus the battery can be disposed on the charging dock directly.

The arm 13 of the robot 1 may include motors, a gear reducer, a drive plate, a screw rod and a joint configured to drive the arm to perform a movement or action. The arm 13 of the robot 1 may further include an encoder configured to detect the position or the movement of the arm and to determine whether the movement of the arm is reached the limitation. The arm 13 of the robot 1 may include a microcontroller unit (MCU) configured to control the movement or action of the arm 13. In some embodiments, the arm 13 of the robot 1 may include a temperature/current sensor configured to detect or measure the temperature or the current of the motor to check whether the loading of the arm is within a threshold. If so, the MCU is configured to terminate the action of the arm 13 until the temperature or the current measured by the temperature/current sensor is less than the threshold.

The end-effector 14 of the robot 1 is disposed at the distal end of the arm 13 and configured to perform a particular task, such as grasping a work tool or stacking multiple components. The end-effector 14 may include an image sensor (e.g., wrist camera) configured to capture the images of an object to be touched or grasped and/or to detect the location or the relative position between the object and the end-effector 14. The end-effector 14 may include a fiducial or fiducial marker (MUD) configured to identify a particular marker within the current image view. The end-effector 14 may further include a force sensor configured to detect or measure the force applied to the object by the end-effector 14.

In some embodiments, the head 10, the body 11, the base 12, the arm 13 and the end-effector 14 of the robot 1 can be connected and communicate to each other through a communication protocol (e.g., RS-485) to perform a plurality of actions. For example, the robot 1 can be configured to perform any of the followings actions: talking, 2D or 3D images capture or reconstruction, objects and environments detection, grasping, lifting or moving objects, visual servoing, compliance controlling, navigation, obstacle avoidance and/or infrastructure. In some embodiments, the robot can be installed with any kinds of operation systems, applications, software and/or firmware depending on different requirements. In some embodiments, the operation systems, applications, software and/or firmware can be updated automatically or manually. In some embodiments, the robot 1 is configured to perform self-learning. For example, the robot 1 can be connected to the Internet or cloud by its communication module to search information in response to various situations and to perform an action based on the information from the Internet or cloud.

In some embodiments, the robot 1 can be controlled by a controller, such as a remote (or wireless) controller or a wired controller. For example, a user may input a command or instruction to the controller (e.g., push buttons of the controller) to request the robot 1 to perform actions. However, as the actions performed by a robot become more complicated, the number of the buttons of the controller should increase, which would increase the price or the size of the controller. In some embodiments, the robot 1 may be controlled by entering a series of buttons (e.g., a combination of multiple buttons). For example, one action of the robot can be performed by entering more than one buttons. However, although this may reduce the number of the required buttons of the controller, it is inconvenient for users to remember or check the correspondence between the combination of the buttons and the action performed by the robot 1.

In some embodiments, the robot 1 can be controlled by a voice input. For example, the robot 1 may be equipped with voice recognition module, also known as Automatic Speech Recognition (ASR), which can transform the vocabulary in human language into computer readable input, such as buttons, binary coding or character sequence. However, due to the limitation of the voice recognition technique, a distortion or an error may occur when transforming the human language into computer readable information. In addition, there are too many types of languages existing in the world and even in one language, a single action or command can be expressed by different words, phrases and/or sentences. Therefore, a relatively large database or memory is required for the robot 1 to store the information and a processor with a higher speed is also required to process such a huge data or information, which would increase the price of the robot 1.

In some embodiments, the robot 1 may be controlled by an image, a photo or a picture. For example, the robot 1 may be equipped with a 2D or 3D image recognition module to transform 2D or 3D images captured by the robot 1 into computer readable information. However, to reconstruct the captured 2D or 3D images, a processor with a higher speed is required. In addition, a relatively large database or memory is also required to store the information corresponding to the 2D or 3D images, which would increase the price of the robot 1.

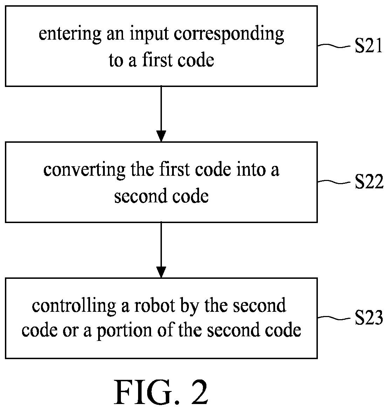

FIG. 2 illustrates a method for controlling a robot in accordance with some embodiments of the present disclosure. The method in FIG. 2 can be used to control the robot 1 in FIG. 1 or any other robots or objects depending on different requirements.

Referring to operation S21, an input corresponding to a first code is entered by, for example, a user. In some embodiments, the first code can be a binary code, an octal code, a decimal code, a hexadecimal or any other computer readable codes. In some embodiments, the input may be an electronic message or an image data, such as an emoji or a sticker entered by the user on an electronic device (e.g., a mobile phone, a tablet, a notebook, a computer, a smart watch, a smart bracelet, a smart glasses and the like). Each electronic message includes or corresponds to a code formed by one or more bits of data units. For example, an emoji and a corresponding code can be converted based on Unicode blocks.

Referring to operation S22, the first code is then converted into a second code (a signal, controlling signal and the like). In some embodiments, the second code can be a binary code, an octal code, a decimal code, a hexadecimal or any other computer readable codes. In some embodiments, the entered input is transmitted from the user's electronic device to the robot 1 and the robot 1 is configured to convert the first code into the second code. Alternatively, the user's electronic device is configured to convert the first code into the second code and then to transmit the second code to the robot 1. In some embodiments, the first code and the second code include different numbers of bits or characters. For example, the first code may be formed by N bits or characters, and the second code may be formed by (N+M) or (N-M) bits or characters, wherein N and M are integers. In some embodiments, the first code and the second code are formed by the same number of bits or characters, but they are encoded by different coding methods (or scheme).

Referring to operation S23, the robot 1 is controlled by the second code or a portion of the second code. For example, the second code or a portion of the second code corresponds to an action or multiple actions of the robot 1. In some embodiments, if the first code is formed by N bits or characters and the second code is formed by N+M bits or characters, the N bits or characters of the first code or the second code can be used for the expression of the electronic message (e.g., the emoji or the sticker) while the M bits or characters of the second code is used to control the robot 1. In other embodiments, if the first code and the second code are formed by the same number of bits or characters but are encoded by different coding methods, the first code can be converted into the second code according to, for example, a conversion table (or a lookup table). In some embodiments, the conversion operation may be performed at the user's electronic message, a cloud, a server or the robot 1 depending on different requirements.

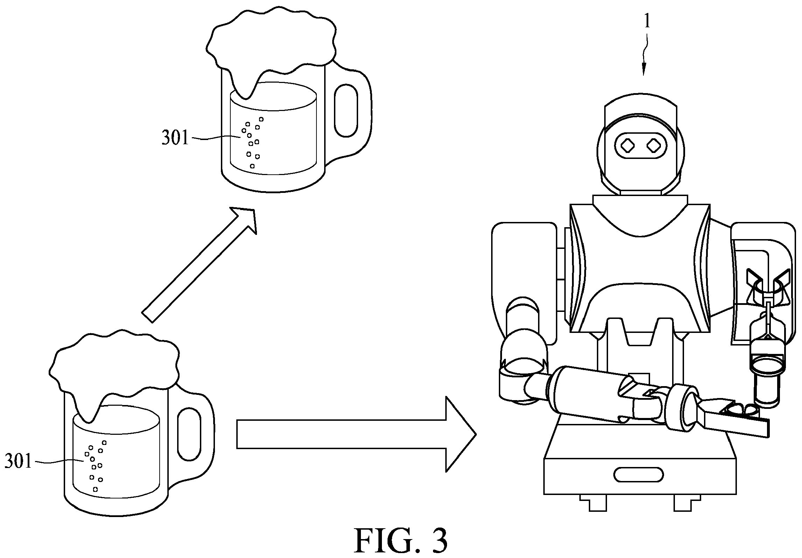

FIG. 3 illustrates a flow diagram for controlling the robot 1 of FIG. 1 in accordance with some embodiments of the present disclosure. In some embodiments, the robot 1 can be replaced by any other robots or devices that can perform similar function.

As shown in FIG. 3, a user can input an emoji 301 (or sticker) on an electronic device 30 (e.g., a mobile phone, a tablet, a notebook, a computer, a smart watch, a smart bracelet, a smart glasses and the like). The emoji 301 (or sticker) is defined by or corresponding to a first code. In some embodiments, the first code can be a binary code, an octal code, a decimal code, a hexadecimal or any other computer readable codes. In some embodiments, the first code is formed by N bits or characters.

The first code can be transmitted to a screen 31 to display the emoji 301 (or sticker) on the screen 31. In some embodiments, the screen 31 may be included in any kinds of electronic devices (e.g., a mobile phone, a tablet, a notebook, a computer, a smart watch, a smart bracelet, a smart glasses and the like) or the robot 1. For example, after the user enters the emoji 301 (or sticker), the first code corresponding to the emoji 301 (or sticker) is transmitted to the screen 31 or the electronic device including the screen 31, and then the screen 31 is configured to display the emoji 301 (or sticker) entered by the user according to the first code.

In some embodiments, after the user inputs the emoji 301 (or sticker), the first code is also converted into a second code, and the second code is then transmitted to the robot 1 to instruct or operate the robot 1 to perform an action or actions. In other embodiments, after the user inputs the emoji 301 (or sticker), the first code is transmitted to the robot 1 and then converted into the second code to instruct or operate the robot 1 to perform an action or actions. In some embodiments, the conversion operation between the first code and the second code is performed according to the operations S21, S22 and S23 shown in FIG. 2. Alternatively, the conversion operation may be performed by any other suitable conversion methods. In some embodiments, the conversion operation can be performed by the user's electronic device 30, the robot 1 or other devices (e.g., a server).

For example, when the user enters an emoji (or sticker) showing an icon of beer on his/her electronic device 30, the icon of beer will be displayed on the screen 31 of the electronic device 30 or other electronic device. The first code corresponding to the icon of the beer is converted into the second code (the conversion operation may be performed at the user's electronic device, the robot 1 or other devices) corresponding to an action or actions of the robot 1. After the robot 1 receives the second code, the robot is configured to perform an action or actions corresponding to the second code. For example, the icon of beer may correspond to a command or instruction to request the robot 1 to grab a bottle of beer for the user, and thus the robot 1 will find a bottle of beer and take it to the user after the icon of beer is entered by the user.

In accordance with the embodiments in FIG. 3, it is more convenient and easier for a user to control the robot 1 by entering the image data (e.g., emoji or sticker) on his/her electronic device. In addition, the memory of the robot 1 is configured to store the second code and its corresponding actions, and thus the amount of data or information stored in the memory of the robot 1 can be reduced. Moreover, since each of the actions performed by the robot 1 has its corresponding code, the amount of the data or information processed by a processing unit of the robot 1 can be reduced, which would in turn reduce the cost or responding time of the robot 1.

As used herein, the singular terms "a," "an," and "the" may include plural referents unless the context clearly dictates otherwise. In the description of some embodiments, a component provided "on" or "over" another component can encompass cases where the former component is directly on (e.g., in physical contact with) the latter component, as well as cases where one or more intervening components are located between the former component and the latter component.

While the present disclosure has been described and illustrated with reference to specific embodiments thereof, these descriptions and illustrations do not limit the present disclosure. It can be clearly understood by those skilled in the art that various changes may be made, and equivalent components may be substituted within the embodiments without departing from the true spirit and scope of the present disclosure as defined by the appended claims. The illustrations may not necessarily be drawn to scale. There may be distinctions between the artistic renditions in the present disclosure and the actual apparatus, due to variables in manufacturing processes and such. There may be other embodiments of the present disclosure which are not specifically illustrated. The specification and drawings are to be regarded as illustrative rather than restrictive. Modifications may be made to adapt a particular situation, material, composition of matter, method, or process to the objective, spirit and scope of the present disclosure. All such modifications are intended to be within the scope of the claims appended hereto. While the methods disclosed herein have been described with reference to particular operations performed in a particular order, it can be understood that these operations may be combined, sub-divided, or re-ordered to form an equivalent method without departing from the teachings of the present disclosure. Therefore, unless specifically indicated herein, the order and grouping of the operations are not limitations of the present disclosure.

## Claims

1. A method for controlling an object, **characterized in that** the method comprises:
selecting an image data corresponding to a first code;
converting the first code into a second code; and
controlling the object by the second code or a portion of the second code.

2. The method of claim 1, wherein the image data is associated with an emoji or a sticker.

3. The method of claim 1, wherein the first code and the second code include different numbers of bits or characters, and wherein a portion of the second code is identical to the first code.

4. The method of claim 1, wherein the first code and the second code are encoded by different coding schemes.

5. The method of claim 1, wherein the first code is converted into the second code according to a conversion table or a lookup table.

6. The method of claim 1, wherein the object is a robot.

7. A device, **characterized in that** the device comprises
a receiver configured to receive a first code, wherein the first code corresponding to an image data;
a conversion element configured to convert the first code into a second code; and
a transmitter configured to transmit the second code to an object.

8. The device of claim 7, wherein the image data is associated with an emoji or a sticker.

9. The device of claim 7, wherein the first code and the second code include different numbers of bits or characters, and wherein a portion of the second code is identical to the first code.

10. The device of claim7, wherein the first code and the second code are encoded by different coding schemes.

11. The device of claim 7, wherein the first code is converted into the second code according to a conversion table or a lookup table.

12. The device of claim 7, wherein the object is a robot controlled by the second code or a portion of the second code.

13. A robot, **characterized in that** the robot comprises:
a communication module configured to receive a code; and
a processor configured to convert the code into a signal,
wherein the code is associated with an image displayed on a display device, and
wherein the signal is associated with behavior of the robot.

14. The robot of claim 13, wherein the image is associated with an emoji or a sticker.

15. The robot of claim 13, wherein the code and the signal include different numbers of bits or characters, and wherein the bit patterns of the code and the signal are different.
